# EUROPEAN PATENT APPLICATION

(11) **EP 3 629 150 A1**
(43) Date of publication of application: **01.04.2020**
(21) Application number: 18000760.1
(22) Date of filing: 25.09.2018
(51) Int. Cl.: G06F 8/61, G06F 21/57, H04N 21/418, H04N 21/4185, H04N 21/443

(54) **SECURE ELEMENT HAVING AN IMAGE LOADER PERFORMING SECURITY CHECK SCHEDULE**

(71) Applicant: Giesecke+Devrient Mobile Security GmbH, 81677 München (DE)
(72) Inventor: Hartel, Karl Eglof, 80689 München (DE); Daksiewicz, Daniel, 81241 München (DE); Dietze, Claus, 82395 Obersöchering (DE)

(57) **Abstract**

An Secure Element comprising an Image Loader comprising: - a Core Firmware Loader (CoreOFL) constructed to perform security checks on images received at the Secure Element (SE) from an entity outside the Secure Element (SE), and - at least part of a Management Entity (ME 1/2, ME3) constructed to perform interoperability checks between two or more images.

## Description

### Field of the invention

The present invention relates to a Secure Element having an Image Loader constructed to receive images transmitted to the Secure Element from an external entity outside the Secure Element, and to perform a security check schedule on received images and to transmit, therein considering a result achieved by the security check schedule, the received images to a memory contained in the Secure Element or in a device hosting the Secure Element.

### Background of the invention

Secure Elements have a microcontroller chip providing secure storage and computation resources for sensitive technical fields like payment transaction, mobile network operation, identification of persons, ticketing or electronic health care administration. The Secure Element can be integrated into a module. For modules, different form factors are known. One module form factor is the plug-in card form factor of payment cards, SIM cards, UICC cards, identification cards, ticketing cards. Another module form factor is the embedded form factor (e.g. eSEs or eUICCs) for modules to be soldered or otherwise fixedly mounted into a device (e.g. a smartphone or tablet-Computer). Still another module form factor is the integrated form factor, wherein the Secure Element is fully integrated into some other chip, and therein into the chip die itself or into the chip package, of a device, e.g. one of the chips of a smartphone. Whereas in plug-in cards and embedded Secure Elements data such as operating system and personalization data and applications, and also eSIM profiles, are stored inside the Secure Element, different storage concept are in discussion for integrated Secure Elements. For example, in an integrated Secure Element, execution of the operating system and of applications, and also of eSIM profiles, takes place in a secure processor of the integrated Secure Element. Non-volatile storage of operating system applications, eSIM profiles is in a memory of the device hosting the integrated Secure Element, however in most cases outside the integrated Secure Element.

### Prior Art

The specification [1] Global Platform Card Technology Open Firmware Loader for Tamper Resistant Element v1.3 describes an Image Loader, namely the Open Firmware Loader OFL, provided inside a Secure Element, and constructed to receive images of operation system and personalization data, to perform security checks - particularly authentication and integrity checks - on the images, and to trigger installation of the image contents into a memory of the Secure Element, so as to install in the Secure Element an operating system and personalization data. An Image Loader according to [1] and its surrounding infrastructure are suited for implementation of the present invention. The specification [2] Global Platform Technology Virtual Primary Platform v1.0 describes a Virtual Primary Platform, provided inside a Secure Element, via which an Image Loader of the same Secure Element, particularly the OFL of document [1], can communicate with memory of the same Secure Element. A Virtual Primary Platform of [2] and its surrounding infrastructure are suited for implementation of the present invention. Specification [3] ETSI Smart Secure Platform (SSP) describes possible internal structures of Secure Elements, and suited for implementation of the present invention.

The Open Firmware Loader OFL of [1] ensures by means of security checks, particularly authentication and integrity checks, that of images loaded to a Secure Element, only authentic and integer images are forwarded to memory and installed there.

The installation of a payment image in a Secure Element leads to deployment of a personalized payment application in the Secure Element. With the payment application, payment transactions can be performed. The installation of an MNO image in a Secure Element leads to deployment of a personalized subscription profile in the Secure Element. With the subscription profile, MNO mobile networks can be accessed and used.

In [1], there is defined an Image family identifier, which includes an indicator which technical field the firmware is dedicated to. Possible technical fields or domains are payment transaction, mobile network operation, identification of persons, ticketing or electronic health care administration

Different technical fields or domains can imply different requirements in relation to images. For example, a banking institute, such as a bank compliant with EMV (Europay International, MasterCard and VISA) standards providing payment images to Secure Elements might be willing to allow active several payment images in the same Secure Element at the same time. A Mobile Network Operator MNO on the contrary, might insist and prescribe as a requirement that only one single MNO image or subscription profile shall be active in the same Secure Element at the same time.

The Open Firmware Loader OFL of [1] with its security checks fulfils the typical requirements of image providers providing images to Secure Elements in respect of security. The Open Firmware Loader OFL performs security checks on downloaded images on the occasion of downloading of the images, as well as security checks on images already present on the Secure Element, on the occasion of performing management operations on the image, such as deleting of images. Management operations in this context can for example be loading or deletion of an image from the Secure Element.

The Open Firmware Loader OFL, however, provides no means to consider requirements of image providers that go beyond the security issues authentication and integrity. Particularly, the Open Firmware Loader OFL is unable to perform interoperability checks between different images and enforce measures out of such checks. On the contrary, the OFL is able to check each image only in a way isolated from other images.

Particularly, when the opportunity exists that different image providers will load into a Secure Element images of more than one technical field or domain, and different requirements exist for the different image providers or technical fields or domains, the OFL is unable to consider the different requirements in parallel.

### Objective of the invention

It is an object of the present invention to provide a Secure Element that allows to consider requirements of images with respect to other images, and particularly requirements of different images of different image providers of different technical or business fields or different technical or business domains.

### Summary of the invention

The object of the invention is achieved by a Secure Element with the following features, according to claim 1. Embodiments of the invention are presented in dependent claims.

The Secure Element according to the present invention is characterized in that it comprises an Image Loader that is split into two parts, namely a first part which is a Core Firmware Loader and a second part which is a Management Entity.

The Core Firmware Loader can be constructed similar to the known Open Firmware Loader and is constructed to perform security checks on images received at the Secure Element from an entity outside the Secure Element (and possibly also on images already present, so that the Secure Element can execute them).

The Management Entity, however, is constructed to perform interoperability checks between two or more images. Interoperability can imply technical interoperability or policy interoperability or both. Technical interoperability relates to the question if images are still technically executable in case they are present in the Secure Element or device at the same time. Policy interoperability relates to the question if it is wanted that images are present and executable in the Secure Element or device at the same time, irrespective of if it is technically feasible.

The Management Entity is able to take over the tasks of considering requirements of images with respect to other images, which is not possible by the Core Firmware Loader alone. Particularly, the Management Entity interoperability can imply interoperability of different images of different image providers of different technical fields or different technical or business domains.

For the purpose of checking interoperability, according to embodiments, the Management Entity comprises (i) an access means constructed to access a configuration file, including rules related to a relation of an image to other images, when downloading or installing an image to the memory, and (ii) a processing means constructed to execute itself in combination with the configuration file and thereby enforce the rules of the configuration file, or to enable enforcement of said rules.

The configuration file can be constructed such that it represents executable code that is processed by the Management Entity.

Thus, execution of the processing means in combination with the configuration file allows to consider requirements of images with respect to other images, and particularly requirements of different images of different image providers of different technical fields or different domains.

Images can be loaded into the Secure Element or into the device hosting the Secure Element. The configuration file can be stored inside an image to be loaded. Thus when an image is loaded, automatically also a corresponding configuration file is loaded. Alternatively, a configuration file can be loaded in form of a separate file or additional image, and together with the image. The loading can be done in a manner that the configuration file is loaded into the Secure Element for processing by the processing means, irrespective of the configuration file or the image hosting the configuration file. The configuration file is at the beginning loaded into the Secure Element or into the device hosting the Secure Element. In some cases the configuration file has to be extracted from the image. In some cases the configuration file has to be forwarded to the Secure Element for processing by the processing means at runtime. Storing the configuration file in the image has the advantage that the Secure Element need not provide configuration files for all possibly relevant images, however a loaded image brings its own interoperability rules (technical or/and policy related interoperability). Similarly, in each stored image, a configuration file containing the image's interoperability rules can be stored together with the software (e.g. operating system or application or eSIM profile) deployed from the image.

Images loaded to the Secure Element can be stored to a non-volatile memory located inside the Secure Element itself, or alternatively to a non-volatile memory outside the Secure Element, and for example in the device hosting the Secure Element, however such that execution of code implemented in the image takes place in the Secure Element. For example, if the image contains an eSIM Profile for an integrated iUICC, the image can be stored to an external non-volatile memory outside of the Secure Element in an encrypted fashion. Execution of the eSIM Profile is done inside the Secure Element, therein loading the image of the eSIM Profile from the external non-volatile memory to a volatile working memory inside the Secure Element, decrypting the image inside the Secure Element, and bringing the eSIM Profile to execution inside the Secure Element.

There are two alternatives of the processing means. According to a first alternative, the processing means is constructed as an own executable code unit, constructed to execute itself in connection with or without the configuration file and thereby enforce the rules. According to a second alternative, the processing means is constructed as an interface unit interfacing the Management Entity to the Core Firmware Loader, and constructed to enable enforcement of said rules by initiating the Core Firmware Loader to execute itself in connection with the configuration file and thereby enforce the rules.

According to some embodiments, images can have different image content type, and the Management Entity is assigned to exactly one image content type, or alternatively to a distinct number of several image content types. The image content type can for example be one of the following: MNO in case the image is an image containing an MNO or eSIM subscription profile. EMV in case the image is an image containing an EMV payment application.

Further, the Management Entity can be assigned to exactly one single industry domain, or to a distinct number of several single industry domains. Industry domains can amongst others be MNO (mobile network operator) or payment (financial services).

Types, technical or business fields and technical or business domains can be identified for example via an identifier UUID or a certificate of a server sending data to the Secure Element. In this case, the Secure Element needs to have information which server UUID or certificate is related to which type(s), technical or business field(s) and technical or business domain(s). Such information can for example be stored in the Secure Element or in the device in a table.

The Core Firmware Loader can be constructed to perform, in addition to security checks during loading, security checks on images already present in the memory. So the Open Firmware Loader OFL can perform security checks on downloaded images on the occasion of downloading of the images, as well as security checks on images already present on the Secure Element, on the occasion of performing management operations on the image, such as deleting of images. Management operations in this context can for example be loading or deletion of an image from the Secure Element. The Image Loader, more precisely the Management Entity of the Image Loader, can then determine interoperability issues or conflicting rules and act accordingly (or has already done this before the security checks), e.g. inform the end user about the situation.

Optionally, an image comprises at least an operating system and personalization data. Optionally, an image comprises an eSIM profile.

According to some embodiments, the check for interoperability is performed before the security check. By this order of check, unnecessary security checks for images that are not acceptable from a viewpoint of interoperability anyway, can be avoided, for better efficiency.

### Brief description of the drawings

Embodiments of the invention will now be described with reference to the accompanying drawings, throughout which like parts are referred to by like references, and in which represents:
- Fig. 1: a Secure Element having an OFL, two Management Entities (MEs) having own executable code and three images installed in the Secure Element, according to embodiments of the invention;
- Fig. 2: a Secure Element, similar to the Secure Element of Fig. 1, the two MEs having no own executable code, however each having an API installed to interconnect the ME with the OFL, according to embodiments of the invention;
- Fig. 3: a Secure Element similar to the Secure Element of Fig. 1, however, with two images installed in a device hosting the Secure Element, in-stead of directly in the Secure Element, according to embodiments of the invention;
- Fig. 4: a Secure Element, similar to the Secure Element of Fig. 2, however, with the images Image 1,2,3 installed in a device hosting the Secure Element, instead of directly in the Secure Element, similarly to Fig. 3, according to further embodiments of the invention.

### Detailed description of the invention

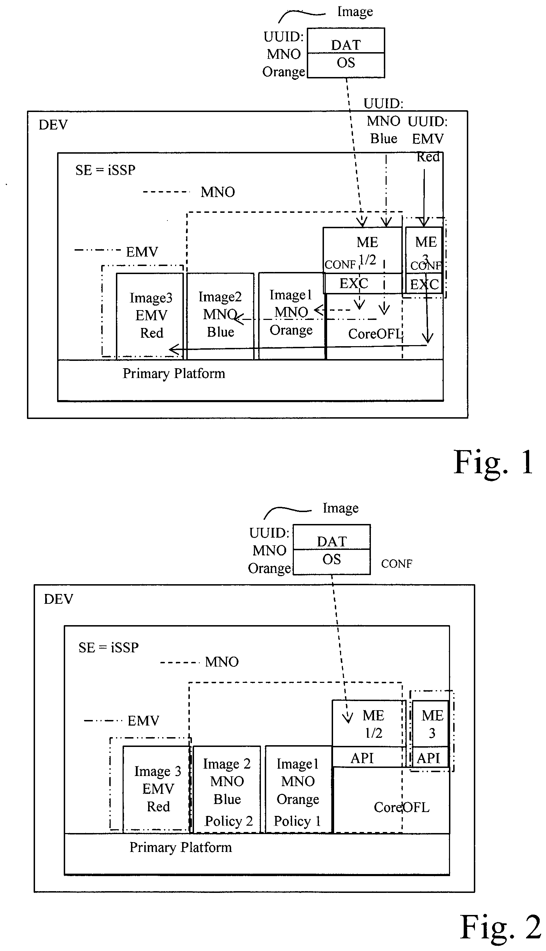

Fig. 1 shows, hosted in a Device DEV, a Secure Element SE having a Core Firmware Loader CoreOFL, two Management Entities ME1/2, ME3 having own executable code EXC and three images Image1, Image2, Image3 installed in the Secure Element SE, according to embodiments of the invention.

The Secure Element SE further comprises a Primary Platform managing runtime execution of operating system and applications on the Secure Element SE.

According to Fig. 1, an exemplary Image to be loaded to the Secure Element SE for checking, and later-on storing to a non-volatile memory, comprises an operating system OS, personalization data DAT, and a universally unique identifier UUID indicating an identity of a server sending the image. The identifier UUID particularly implicitly indicates a type or technical field or domain the server sending the image and thus the image belongs to. The type, technical field or domain of a first image Image1 and of a second image Image2 are mobile network operator MNO. The type, technical field or domain of a third image Image3 is EMV payment application provider EMV. Correspondingly, the Secure Element SE contains a first Management Entity ME 1/2 corresponding to the type, technical field or domain mobile network operator MNO, and a second Management Entity ME3 corresponding to the type, technical field or domain EMV payment application provider EMV.

An image coming from a server of a mobile network operator MNO named Orange is checked for interoperability with other images possibly already present in the device DEV or in the Secure Element SE by the first Management Entity ME 1/2. In addition, the image is checked for security by the Core Firmware Loader OFL, for example in a known manner.

According to Fig. 1, an image from an MNO Orange is checked, approved and stored as image 1, so as to implement in the Secure Element SE an eSIM profile of MNO Orange. A further image, from MNO Blue, is also checked and approved, and is stored as image2, so as to implement in the Secure Element SE an eSIM profile of MNO Blue. Since also the image form MNO Blue is coming from a server of type, technical field or domain MNO, the images form MNO Orange and MNO Blue are checked for interoperability by the same Management Entity ME 1/2.

In the example of Fig. 1, MNOs Orange and Blue accept for each other to have their eSIM Profiles present on the Secure Element at the same time. An image of a third MNO, for example MNO Yellow, could be rejected due to lack of interoperability in case an eSIM Profile of MNO Orange is present on the Secure Element already.

Still a further image comes from a server of an EMV payment provider and has an identifier EMV Red. This image is checked for interoperability with other images by a different Management Entity, namely the second Management Entity ME3 assigned to the type, technical field or domain EMV payment application provider EMV. Also for the image of EMV Read, interoperability with other images is approved by the second Management Entity ME3, the security checks are also passed successfully, and thus the image is stored to the Secure Element as image 3, so as to implement an EMV payment application in the Secure Element.

The security checks for all images of all types are done by the common Core Firmware Loader CoreOFL.

According to Fig. 1, each Management Entity ME 1/2, 3 comprises a configuration file CONF and a processing means. In the embodiment or Fig. 1, the processing means is an executable code EXC implemented in the Secure Element SE. Execution of the processing means / executable code EXC in combination with the configuration file CONF effects performing the required interoperability checks.

Fig. 2 shows a Secure Element SE, similar to the Secure Element SE of Fig. 1, according to further embodiments of the invention. In contrast to Fig. 1, the Management Entity ME1/2, ME3 of Fig. 2 have no own executable code, however each have an application programing interface API installed to interconnect the respective Management Entity ME with the Core Firmware Loader CoreOFL. Further in contrast to Fig. 1, in Fig. 2 the configuration files containing the interoperability rules of stored images are stored together with the respective image Image 1,2,3, or rather with the EMV or eSIM application deployed from the respective image 1,2,3. Similarly, for a loaded image, the configuration file is loaded together with the image, or is contained in the image.

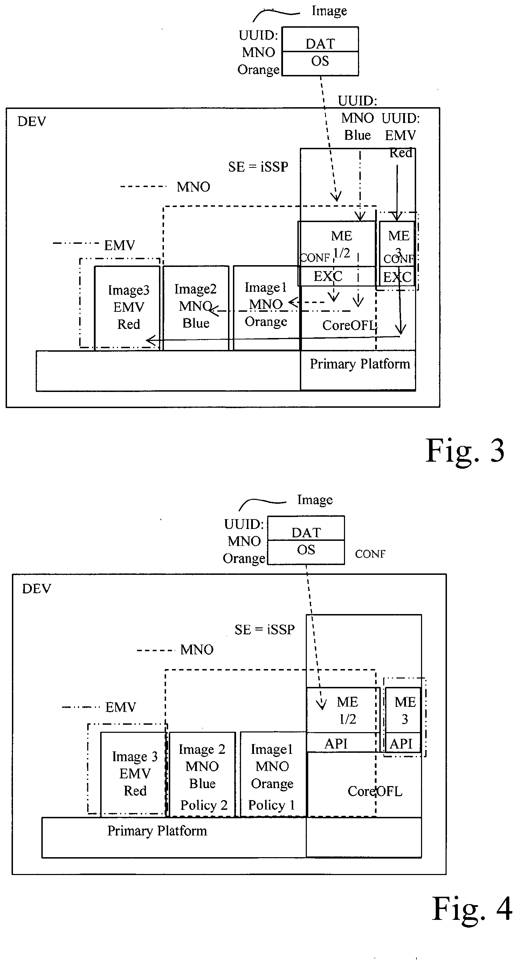

Fig. 3 shows a Secure Element SE similar to the Secure Element SE of Fig. 1, however, with the images Image 1,2,3 installed in a device DEV hosting the Secure Element SE, instead of directly in the Secure Element SE, according to further embodiments of the invention.

Fig. 4 shows a Secure Element SE, similar to the Secure Element SE of Fig. 2, however, with the images Image 1,2,3 installed in a device DEV hosting the Secure Element SE, instead of directly in the Secure Element SE, in this respect similarly to Fig. 3, according to further embodiments of the invention.

### Cited documents

[1] Global Platform Card Technology Open Firmware Loader for Tamper Resistant Element v1.3
[2] Global Platform Technology Virtual Primary Platform v1.0
[3] ETSI Smart Secure Platform (SSP)

## Claims

1. A Secure Element (SE) having an Image Loader constructed to:
- receive images transmitted to the Secure Element (SE) from an external entity outside the Secure Element (SE),
- perform a security check schedule on received images, and
- transmit, therein considering a result achieved by the security check schedule, the received images to a memory included in the Secure Element (SE) or in a device (DEV) hosting the Secure Element (SE);
**characterized in that** the Image Loader comprises
- a Core Firmware Loader (CoreOFL) constructed to perform security checks on images received at the Secure Element (SE) from an entity outside the Secure Element (SE), and
- at least part of a Management Entity (ME 1/2, ME3) constructed to perform interoperability checks between two or more images.

2. The Secure Element according to claim 1, wherein the Management Entity (ME 1/2, ME3) comprises
- an access means constructed to access a configuration file, being stored in the image or loaded together with an image, stored in the Secure Element (SE) or stored in a device (DEV) hosting the Secure Element (SE) in a way it is accessible by the Secure Element (SE), and including rules related to a relation of an image to other images, when downloading or installing an image to the memory, and/or
- a processing means constructed to execute itself and thereby enforce the rules of the configuration file, or to enable enforcement of said rules.

3. The Secure Element (SE) according to claim 2,
wherein the processing means is constructed as:
- either an own executable code unit (EXC), constructed to execute itself in connection with or without the configuration file and thereby enforce the rules;
- or an interface unit (API) interfacing the Management Entity (ME 1/2, ME3) to the Core Firmware Loader (CoreOFL), and constructed to enable enforcement of said rules by initiating the Core Firmware Loader (CoreOFL) to execute itself in connection with the configuration file and thereby enforce the rules.

4. The Secure Element (SE) according to any of claims 1 to 3, wherein
- each image that can be processed by the at least one Management Entity (ME 1/2, ME3) has an image content type, corresponding to a content of the image, and
- the Management Entity (ME 1/2, ME3) is assigned to exactly one image content type, or alternatively to a distinct number of several image content types.

5. The Secure Element (SE) according to claim 4, wherein the image content type is one of the following: MNO in case the image is an image containing an MNO subscription profile; EMV in case the image is an image containing an EMV payment application.

6. The Secure Element (SE) according to any of claims 1 to 5, wherein the Management Entity (ME 1/2, ME3) is assigned to exactly one single industry domain, or alternatively to a distinct number of several single industry domains.

7. The Secure Element (SE) according to any of claims 1 to 6, wherein the configuration file contains said rules represented as executable code that is processed by the Management Entity (ME 1/2, ME3).

8. The Secure Element (SE) according to any on claims 1 to 7, wherein the Core Firmware Loader (OFL) is in addition constructed to perform security checks on images already present in the memory.

9. The Secure Element (SE) according to any on claims 1 to 8, wherein an image comprises an operating system (OS) and/or personalization data (DAT).

10. The Secure Element (SE) according to any on claims 1 to 9, wherein an image comprises an application.

11. The Secure Element (SE) according to claim 9, wherein the application is an eSIM Profile, a payment application, a loyalty application, a ticketing application or an application for some other use case.
